# EUROPEAN PATENT SPECIFICATION

(11) **EP 0 925 204 B1**
(45) Date of publication and mention of the grant of the patent: **16.08.2001**
(21) Application number: 96938564.0
(22) Date of filing: 27.09.1996
(51) Int. Cl.: B60R 7/06, B60R 11/00, B60K 37/04

(54) **VEHICLE**
KRAFTFAHRZEUG
VEHICULE

(43) Date of publication of application: 30.06.1999
(73) Proprietor: AB VOLVO, 405 08 Göteborg (SE)
(72) Inventor: GYLLENSPETZ, Per, S-416 52 Göteborg (SE)
(74) Representative: Mossmark, Anders
(86) International application number: PCT/SE96/01217
(87) International publication number: WO 98/13230

(56) References cited:
- EP-A- 0 668 191
- WO-A-83/01602
- WO-A-88/07460
- GB-A- 2 079 694
- US-A- 3 134 945

## Description

### TECHNICAL FIELD:

The present invention relates to a vehicle, more specifically a vehicle which in a quick and easy way can be adapted to, and provided with, a number of different accessories functions in the passenger compartment, such as a child seat, a hi-fi system etc.

### BACKGROUND OF THE INVENTION:

Traditionally, the equipment of the passenger compartment in vehicles, primarily passenger cars, is essentially constituted by a dashboard which is situated in the front part of the compartment and which is provided with control devices and switches, wherein a driver's seat and a passenger seat are situated behind said dashboard. Furthermore, the compartment comprises a back seat for passengers, which is located in the back part of said compartment.

More and more extensive demands are called for today's cars to have the possibility of an all-round and, not least, safe utilization of the available space in the car. The car must be capable of readily adapting to different utility situations, such as transportation of small children or a bulky load. In connection with this adaption, utilization of different accessories are often required, such as, for example, a safety tested child seat. According to known technique, the child seat is either placed in the back seat, where the child seat is turned forwards or backwards, in the front passenger seat or in the dashboard, where the child seat is placed immediately in front of said passenger seat in the front. A disadvantage as regards these child seat arrangements is that the driver, when he/she is travelling alone with the child, has an insufficient watch over the child during driving. Also, under these circumstances there is no possibility for the driver to reach the child, without the driver having to stretch him-/herself and accordingly lose the concentration as regards the movement of the vehicle. A further disadvantage is that no passenger (apart from the child itself) can use the passenger seat in the front, which is due to the fact that the child seat is situated in said passenger seat or in the dashboard immediately in front of said passenger seat.

Furthermore, the rapid progress in the field of information technology has made it possible to use advanced office equipment in vehicles, such as a fax machine, a computer with word processor, a telephone modem etc. Another example of advantageous accessories is equipment for cold storage and heating of food-stuffs. At the present point in time, there is however no available area in the car that is easily accessible from the driver's place and that is intended for such accessories equipment, wherein said accessories equipment is generally too bulky to be accommodated in, for example, the space which otherwise is intended for a normal-sized car stereo system.

Nowadays, the car dashboard is in most cases provided with a so-called central bracket which, as the term implies, is situated in the central part of the dashboard. Traditionally, the central bracket contains a hi-fi system, control devices, exhaust nozzles for the car air-conditioning system, an outlet for the cigarette lighter and smaller storage compartments. Accordingly, the space that is occupied by the central bracket is to a great extent traditionally intended for exactly these functions, which is partly due to the fact that said bracket is situated within the driver's (peripheral) field of view and reach during driving.

Thus, as a result of the above-described, strongly tradition-bound manner of equipping the passenger compartment in the today's vehicles, especially passenger cars, the possibilities for an all-round utilization of the accessible areas in the cars are limited. Instead of, as far as possible, using the passenger compartment for those individuals and those objects that the user wishes to transport in the car, there is a tendency towards retaining, in a routine way, an out-of-date approach, such as, for example, arranging the hi-fi system, the controls and the exhaust nozzles for the car air-conditioning system in the central part of the dashboard, even though this is neither technically nor ergonomically necessary.

### SUMMARY OF THE INVENTION:

The invention solves above-mentioned problems by replacing the traditional positioning of control devices in the central part of the dashboard with a large cassette compartment and a number of replaceable cassette units which fit the cassette compartment, said cassette units having different accessories functions between themselves, such as a child seat, a dog basket, office equipment, a hi-fi system, a refrigerator, a microwave oven or storage space. In this manner, a better utilization is achieved of the valuable space in the car that is situated within the driver's field of view and reach during driving, wherein this also presents a very safe positioning of children or a load from a collision-safety point of view. According to the invention, said area is utilized for such functions regarding transport and accessories that are essential for the individual, instead of said area traditionally being occupied by bulky control and ventilation nozzles, which advantageously can be rearranged to a safer control environment around the steering wheel and main instrumentation.

More specifically, the invention relates to a vehicle which, according to appended claim 1, comprises a driver's seat, a passenger seat which is situated at the side of the driver's seat, and a dashboard which is situated in front of said driver's seat and said passenger seat, wherein the upper edge of said dashboard constitutes the lower limitation of the driver's field of view ahead. In particular, the invention relates to a hole-shaped cassette compartment which is situated in connection with the central part of the dashboard in front of, and between, the driver's seat and the passenger seat and within the driver's field of view and reach during driving, wherein said cassette compartment is adapted for accommodating a cassette unit having a predetermined accessories function and wherein the height of the cassette compartment constitutes at least 30% of the vertical distance from the vehicle floor up to the lower limitation of the driver's field of view ahead.

In an advantageous embodiment, the cassette compartment is provided with connection outlets, such as outlets for power supply, ventilation, climate control, antenna and sensor signal for airbag. Advantageously, one cassette unit may be constituted by a child seat turned backwards. Other cassette units may be constituted by, for example, office equipment, a hi-fi system, a dog basket, storage space or means for cold storage and/or heating of food-stuffs.

Other features and advantages of the invention will be apparent from the following description of a preferred embodiment.

### BRIEF DESCRIPTION OF THE DRAWINGS:

The invention will be described in the following with an embodiment and with reference to the annexed drawing, in which
Fig. 1 shows a broken perspective view of the passenger compartment in a vehicle according to the invention,
Fig. 2 shows a cassette unit comprising a cold storage compartment for food-stuffs,
Fig. 3 shows a cassette unit comprising a fax machine and document compartments, and
Fig. 4 shows a cassette unit comprising a hi-fi system.

### PREFERRED EMBODIMENT:

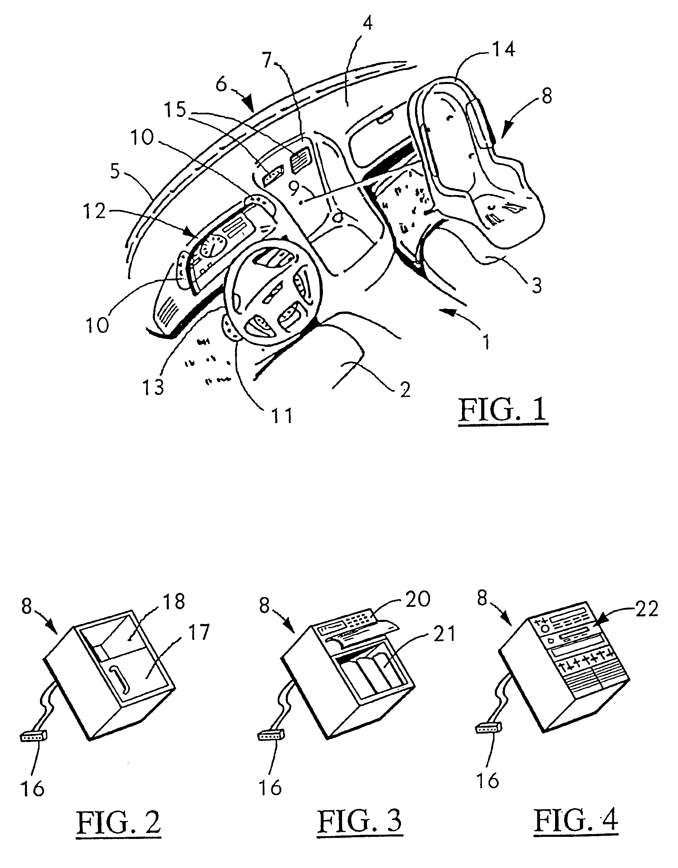

In Fig. 1, the reference numeral 1 refers generally to the front part of the passenger compartment in a passenger car according to the invention. In a known manner, the passenger compartment 1 contains a driver's seat 2 and a passenger seat 3, which is situated at the side of the driver's seat 2. A dashboard 4 is situated in front of said driver's seat 2 and passenger seat 3, wherein the upper edge 5 of said dashboard 4 constitutes the lower limitation of the driver's field of view ahead. In the preferred embodiment, a hole-shaped cassette compartment 7 is integrally arranged in the central part 6 of the dashboard 4 in front of, and between, the driver's seat 2 and the passenger seat 3.

The cassette compartment 7 is adapted for accommodating a cassette unit 8 which in the shown embodiment in Fig. 1 is constituted by a child seat 14 turned backwards, said cassette unit 8 being shown in an exploded view with a fictituos connection line 9 towards the centrally situated cassette accommodation 7. In a manner which will described later, other predetermined accessories functions can also be accommodated in exchangeable cassette units 8.

Due to its positioning in the central part 6 of the dashboard 4, the cassette unit 8 that is accommodated in the cassette compartment 7 is situated within the driver's field of view and reach during driving. In the shown example, the cassette unit is constituted by a child seat 14, wherein this arrangement results in a considerable advantage from a driving-safety point of view, as compared with known arrangements of child seats. This is due to the fact that the child is situated within the driver's peripheral field of view during driving and can be reached quickly, without the driver having to stretch him-/herself or having to turn his/her head. Thus, the driver can be more concentrated on the surrounding traffic conditions, without this necessarily having to result in that the driver loses his/her control of the child. Also, the central positioning of the child seat 14, immediately behind the cowl wall of the car, is very advantageous from a collision-safety point of view. During collisions from any given sector around the car, the child seat 14 is well protected. An additional advantage is that the passenger seat 3, due to the child seat being centrally situated, will be free for a passenger to use, which is not the case as regards known child seats, which, for example, are mounted immediately in front of the glove compartment and thus occupies the entire passenger seat.

As is clearly apparent from Fig. 1, the cassette compartment 7 and the associated cassette units 8 according to the invention occupy a considerably larger area of the dashboard 4 than what is occupied by the largest, presently available, car hi-fi systems. More specifically, the height of the cassette compartment constitutes at least 30%, preferably 50%, of the vertical distance from the vehicle floor up to the lower limitation of the driver's field of view ahead. Maximally, the cassette compartment extends from the vehicle floor up to said lower limitation of the driver's field of view ahead. The large area is absolutely necessary for the compartment to be capable of accommodating accessories, such as a child seat etc.

In a vehicle according to the invention, the control devices etc, which in conventional vehicles are situated in connection with the central bracket in the dashboard, are instead situated around the steering wheel and the main instrumentation. Thus, a safer environment involving said control devices is also provided. Fig. 1 shows examples of said control devices 10, 11 being schematically positioned around the steering wheel 12 and the main instrumentation 13 of the car. Advantageously, the parking brake and the gear selector (not shown) also can be placed in this area. In order to provide sufficient space for a cassette unit 8 in the form of, for example, a child seat, a vehicle according to the invention can advantageously be constructed slightly wider than normally.

Furthermore, the cassette compartment 7 is provided with connection outlets 15, such as outlets for power supply, ventilation, climate control, antenna and a sensor signal for an airbag. In this regard, the cassette units are provided with corresponding connectors 16 or connection channels (not shown) for connection to the outlets 15. By means of the connection outlets 15, for example a child seat may advantageously be provided with ventilation, speakers and an airbag.

Preferably, the cassette unit 7 is constructed in such a way that it, when the cassette unit 8 is removed, can serve as storage space for, for example, a handbag, a brief-case or a shopping bag. Apart from the fact that the positioning immediately at the side of the driver's seat makes it easier to put down and pick up the case/bag, as compared with the usual positioning in the back seat, said positioning also is safer, which is due to the fact that there is no risk of loose objects flying forwards in the event of a collision. According to the invention, a cassette unit 8 can also be specially constructed as a storage compartment (not shown) being provided with equipment for securing of the load, said equipment for example being in the form of belts or a load securing net.

As previously mentioned, the cassette units 8 can be constructed in such a way that they fulfil predetermined accessories functions. In this regard, Fig. 2 shows a cassette unit 8 that is provided with a cold storage compartment 17 for food-stuffs combined with a dry storage compartment 18. Furthermore, the cassette unit 8 is provided with a connector 16 for power supply. Also, the cold storage compartment may advantageously be combined with a heating device for food-stuffs, such as a microwave oven (not shown). Of course, the cassette unit 8 also can consist of only one single microwave oven, alternatively in combination with a storage compartment 18. The storage compartment 18 can advantageously be constructed to accommodate sizeable beverage containers, such as, for example, 1,5 litre soft drink bottles.

Fig. 3 shows a cassette unit 8 provided with office equipment in the form of a fax machine 20 and document compartments 21. The cassette unit 8 can also be provided with other office equipment, such as, for example, a computer terminal with a screen unit and a telephone.

Fig. 4 shows a cassette unit 8 provided with a large hi-fi system 22 which, for example, comprises a CD-changer and so-called sub-woofer speakers.

Also, the cassette unit 8 can be constructed as a dog basket (not shown) for smaller and medium-sized dogs. The dog basket is preferably provided with means for leashing the dog. In this manner, a way of transporting the dog is obtained which is advantageous from a traffic- and collision-safety point of view, wherein the dog also can be guarded, during driving.

The invention is not limited to the embodiment which is described above and shown in the drawing, but may be varied freely within the scope of the appended claims. For example, it is not necessary for the cassette unit 7 to be integrally arranged in the dashboard 4, but it may instead constitute a free space between, and in front of, the driver's seat 2 and the passenger seat 3.

## Claims

1. Vehicle comprising a driver's seat (2), a passenger seat (3) which is situated at the side of the driver's seat (2), and a dashboard (4) which is situated in front of said driver's seat (2) and said passenger seat (3), wherein the upper edge (5) of said dashboard (4) constitutes the lower limitation of the driver's field of view ahead,
**characterized in** that a hole-shaped cassette compartment (7) is situated in connection with the central part (6) of the dashboard (4) in front of, and between, the driver's seat (2) and the passenger seat (3) and within the driver's field of view and reach during driving, wherein said cassette compartment (7) is adapted for accommodating a cassette unit (8) having a predetermined accessories function and wherein the height of the cassette compartment (7) constitutes at least 30% of the vertical distance from the vehicle floor up to the lower limitation of the driver's field of view ahead.

2. Vehicle according to claim 1,
**characterized in** that the cassette compartment (7) is provided with connection outlets (15), such as outlets for power supply, ventilation, climate control, antenna and a sensor signal for an airbag.

3. Vehicle according to claim 1,
**characterized in** that the cassette compartment (7) constitutes a storage space when the cassette unit (8) is removed.

4. Vehicle according to claim 1,
**characterized in** that the height of the cassette compartment (7) constitutes at least 50% of the vertical distance from the vehicle floor up to the lower limitation of the driver's field of view ahead.

5. Vehicle according to claim 1,
**characterized in** that the cassette compartment (7) extends from the vehicle floor up to the lower limitation of the driver's field of view ahead.

6. Vehicle according to claim 1,
**characterized in** that the cassette unit (8) is constituted by a child seat (14) turned backwards.

7. Vehicle according to claim 1,
**characterized in** that the cassette unit (8) is constituted by a hi-fi system (22).

8. Vehicle according to claim 1,
**characterized in** that the cassette unit (8) comprises office equipment, such as a fax machine, document compartments etc.

9. Vehicle according to claim 1,
**characterized in** that the cassette unit (8) comprises means (17) for cold storage and/or heating of food-stuffs.

10. Vehicle according to claim 1,
**characterized in** that the cassette unit (8) is constituted by a dog basket.

11. Vehicle according to claim 1,
**characterized in** that the cassette unit (8) comprises a storage compartment which is provided with equipment for securing of the load.

## Patentansprüche

1. Kraftfahrzeug mit einem Fahrersitz (2), einem Passagiersitz (3), der an der Seite des Fahrersitzes (2) angeordnet ist, und mit einem Armaturenbrett (4), das vor dem Fahrersitz (2) und dem Passagiersitz (3) angeordnet ist, wobei der obere Rand (5) des Armaturenbrettes (4) die untere Begrenzung des vorderen Sichtfeldes des Fahrers bildet,
dadurch gekennzeichnet, dass im Zusammenhang mit dem mittleren Abschnitt (6) des Armaturenbrettes (4) ein lochförmiges Kassettenfach (7) vor und zwischen dem Fahrersitz (2) und dem Passagiersitz (3) und innerhalb des Sichtfeldes und der Reichweite des Fahrers während des Fahrens angeordnet ist, wobei das Kassettenfach (7) zur Aufnahme einer Kassetteneinheit (8) mit einer vorbestimmten Zusatzfunktion vorgesehen ist und wobei die Höhe des Kassettenfachs (7) wenigstens 30% der vertikalen Entfernung von dem Fahrzeugboden bis hoch zu der unteren Begrenzung des vorderen Sichtverhältnisses des Fahrers beträgt.

2. Fahrzeug nach Anspruch 1, dadurch gekennzeichnet, dass das Kassettenfach (7) mit Anschlussauslässen (15), wie beispielsweise Auslässen für Stromversorgung, Belüftung, Klima, Steuerung, Antenne und ein Sensorsignal für einen Airbag versehen ist.

3. Fahrzeug nach Anspruch 1, dadurch gekennzeichnet , dass das Kassettenfach (7) einen Speicherraum bildet, wenn die Kassetteneinheit (8) entfernt ist.

4. Fahrzeug nach Anspruch 1, dadurch gekennzeichnet, dass die Höhe des Kassettenfachs (7) wenigstens 50% des vertikalen Abstandes von dem Fahrzeugboden hoch bis zur unteren Begrenzung des vorderen Sichtfeldes des Fahrers beträgt.

5. Fahrzeug nach Anspruch 1, dadurch gekennzeichnet, dass sich das Kassettenfach (7) von dem Fahrzeugboden hoch bis zur unteren Begrenzung des vorderen Sichtfeldes des Fahrers erstreckt.

6. Fahrzeug nach Anspruch 1, dadurch gekennzeichnet, dass die Kassetteneinheit (8) durch einen rückwärtsgewandten Kindersitz (14) gebildet ist.

7. Fahrzeug nach Anspruch 1, dadurch gekennzeichnet, dass die Kassetteneinheit (8) durch ein Hifi-System (22) gebildet ist.

8. Fahrzeug nach Anspruch 1, dadurch gekennzeichnet, dass die Kassetteneinheit (8) eine Büroausrüstung, wie beispielsweise ein Faxgerät, Aktenfächer, usw. aufweist.

9. Fahrzeug nach Anspruch 1, dadurch gekennzeichnet, dass die Kassetteneinheit (8) eine Einrichtung (17) zum kalten Speichern und/oder Erhitzen von Nahrungsmitteln aufweist.

10. Fahrzeug nach Anspruch 1, dadurch gekennzeichnet, dass die Kassetteneinheit (8) durch einen Hundekorb gebildet ist.

11. Fahrzeug nach Anspruch 1, dadurch gekennzeichnet, dass die Kassetteneinheit (8) ein Speicherfach aufweist, dass mit einer Ausrüstung zum Sichern der Ladung versehen ist.

## Revendications

1. Véhicule comportant un siège (2) de conducteur, un siège (3) de passager placé à côté du siège (2) du conducteur, et un tableau de bord (4) placé devant le siège (2) du conducteur et le siège (3) du passager, dans lequel le bord supérieur (5) du tableau de bord (4) constitue la limite inférieure du champ de vision vers l'avant du conducteur,
caractérisé en ce qu'un compartiment (7) de cassette en forme de trou est disposé dans la partie centrale (6) du tableau de bord (4) en avant du siège (2) du conducteur et du siège (3) du passager et entre ces sièges, dans le champ de vision du conducteur et à la portée de celui-ci pendant la conduite, le compartiment de cassette (7) étant destiné à loger une unité de cassette (8) ayant une fonction prédéterminée d'accessoire, et la hauteur du compartiment de cassette (7) constitue 30 % au moins de la distance verticale comprise entre le plancher du véhicule et la limite inférieure du champ de vision du conducteur vers l'avant.

2. Véhicule selon la revendication 1, caractérisé en ce que le compartiment de cassette (7) à des prises (15) de connexion, telles que des prises d'alimentation électrique, de ventilation, de réglage de climatisation, d'antenne, et d'un signal de capteur de sac gonflable.

3. Véhicule selon la revendication 1, caractérisé en ce que le compartiment de cassette (7) constitue un espace de stockage lorsque l'unité de cassette (8) est retirée.

4. Véhicule selon la revendication 1, caractérisé en ce que la hauteur du compartiment de cassette (7) constitue au moins 50 % de la distance verticale comprise entre le plancher du véhicule et la limite inférieure du champ de vision vers l'avant du conducteur.

5. Véhicule selon la revendication 1, caractérisé en ce que le compartiment de cassette (7) s'étend depuis le plancher du véhicule jusqu'à la limite inférieure du champ de vision vers l'avant du conducteur.

6. Véhicule selon la revendication 1, caractérisé en ce que l'unité de cassette (8) est constituée par un siège d'enfant (14) tourné vers l'arrière.

7. Véhicule selon la revendication 1, caractérisé en ce que l'unité de cassette (8) est constituée par un système hi-fi (22).

8. véhicule selon la revendication 1, caractérisé en ce que l'unité de cassette (8) comporte un appareil de bureau tel qu'un télécopieur, des compartiments de rangement, etc.

9. Véhicule selon la revendication 1, caractérisé en ce que l'unité de cassette (8) comporte un dispositif (17) de stockage réfrigéré et/ou de chauffage d'aliments.

10. Véhicule selon la revendication 1, caractérisé en ce que l'unité de cassette (8) est constituée par un panier à chien.

11. Véhicule selon la revendication 1, caractérisé en ce que l'unité de cassette (8) comporte un compartiment de rangement comprenant un appareil de fixation de la charge.
